# EUROPÄISCHE PATENTSCHRIFT

(11) **EP 2 724 843 B1**
(45) Veröffentlichungstag und Bekanntmachung des Hinweises auf die Patenterteilung: **03.05.2017**
(21) Anmeldenummer: 13004001.7
(22) Anmeldetag: 10.08.2013
(51) Int. Cl.: B29C 65/20, B29K 105/04, B29K 25/00, B29C 65/30

(54) **Herstellung von XPS-Schaumplatten großer Dicke durch Schweißen**
Manufacture of thick XPS foam panels by means of welding
Fabrication de plaques de mousse XPS de grande épaisseur par soudage

(30) Priorität: 24.10.2012 DE 102012020839
(43) Veröffentlichungstag der Anmeldung: 30.04.2014
(73) Patentinhaber: Jackon Insulation GmbH, 39619 Arendsee (DE)
(72) Erfinder: Hallmann, Uwe, 29482 Küsten (DE); Dr. Plate Mark, 21335 Lüneburg (DE)
(74) Vertreter: Kaewert, Klaus

(56) Entgegenhaltungen:
- WO-A1-2011/133568
- WO-A1-2012/016991
- DE-A1- 1 932 582
- DE-A1-102012 204 822
- FR-A1- 2 590 202

## Beschreibung

Die Erfindung betrifft eine extrudierte Polystyrol(XPS)schaumplatte großer Dicke. Bei dem Polystyrol kann es sich auch um Mischungen mit anderen Kunststoffen handeln. Dabei beträgt der Polystyrolanteil mindestens 50Gew%. Außerdem ist das Polystyrol vorzugsweise eines Polystyrol-Butadien-Coblockpolymer.

Polystyrol, seine Zusammensetzung und seine Herstellung, sind beschrieben in DE690310066, US2409910, US2515250, US2669751, US2848428, US2928130, US3121911, US3770688, US3815674, US3960792 US3960762.

Neue Energiesparverordnungen verlangen vom Bauherrn immer bessere Wärmedämmungen. Aufgrund der begrenzten Verfügbarkeit der nicht erneuerbaren Energieträger (Kohle, Gas, Erdöl) sind alle Verbraucher angewiesen, Energie zu sparen. Dies kann im starken Maße durch eine bessere Hausisolierung geschehen. Vor dem Hintergrund sind in der Vergangenheit Kunststoffschaumplatten mit einer Dicke von mehr als 100 mm, sogar mit einer Dicke von 200mm und mehr entstanden. Das war mit den HFCKW-haltigen Treibmitteln für Extruderschaumplatten ohne weiteres möglich. Die HFCKW-haltigen Treibmittel wurden jedoch wegen ihrer schädigenden Wirkung auf die Ozonschicht durch alternative Treibmittel seit 2002 komplett ersetzt. Seitdem werden Kunststoffschaumplatten aus Polystyrolschaum vorzugsweise mit Kohlendioxid als Treibmittel extrudiert. Allerdings finden dabei auch CoTreibmittel Verwendung. Dazu gehören zum Beispiel Kohlenwasserstoffe, Ketone, Ether und Alkohole.

Mit dem Einsatz von alternativen Treibmitteln haben sich bei der Herstellung dieser Kunststoffschaumplatten erhebliche Schwierigkeiten ergeben. Ab einer Dicke von 80 mm nehmen diese Schwierigkeiten stark zu.

Außerdem verschlechtern sich die Isoliereigenschaften mit dem Einsatz der meisten alternativen Treibmittel beim Extrudieren von dicken (> 80 mm) XPS-Schaumplatten.

Die Isoliereigenschaft des XPS hängt sehr stark von der Zellstruktur des Schaums ab. Diese wird bei der Extrusion bestimmt durch das Verhältnis von Dämmstoffdicke zu Düsenspalt und der Differenz von Schmelzedruck vor dem Düsenspalt zum Druck nach der Düse. Der Schmelzedruck muß durch Verengung des Düsenspaltes vor dem Düsenspalt aufgebaut werden. Das zwingt zur Einhaltung bestimmter Düsenspaltgrenzen. Das heißt, der Düsenspalt kann nicht beliebig weit geöffnet werden, da mit seiner Hilfe der Druck in der Düse erzeugt wird, durch den gewährleistet wird, daß das Treibmittel nicht bereits in der Düse zum Aufschäumen der Schmelze führt.

Bei größer werdender Plattendicke ergibt sich dadurch eine Vergrößerung des Verhältnisses von Dämmstoffdicke zu Düsenspalt. Je größer dieses Verhältnis wird, um so schlechter wird die Zellstruktur und umso schwieriger ist die Herstellung eines Schaumes mit guten Isoliereigenschaften.

In der Vergangenheit ist mit der DE 4421016 A1 vorgeschlagen worden, die oben erläuterten Schwierigkeiten durch Herstellung von Platten mit sicher erreichbarer Dicke und Doppelung der Platten zu überwinden. Dabei war eine Verschweißung zwischen den Platten vorgesehen. Eine Bearbeitung der Platten an den Berührungsflächen war nicht vorgesehen.

Dieser Vorschlag wurde aber nicht umgesetzt, da beim Verschweißen von zwei Platten an der Schweißnaht eine Sperrschicht gegen Wasserdampfdiffusion entsteht und diese für die meisten Anwendungen des XPS als Wärmedämmstoff im Bauwesen erhalten bleiben muß. Die Sperrschicht wird durch die Extrusionshäute an den Berührungsflächen der Platten und besonders aus der thermischen Verbindung entstehende zusätzliche Verhautung gebildet.

Ein Vorschlag zum Verschweißen von Platten findet sich auch in DE 3541053 A1, welche auf die Anmelderin zurückgeht. Dort sind zwar auch zusammengeschweißte Platten dargestellt. Zum Verschweißen dienen Heizkeile, die zwischen den zu verschweißenden Platten angeordnet sind. Wie bei der zuvor erläuterten Schweißtechnik bildet sich mit der einheitlichen Schweißung eine Sperrschicht.

Außerdem ist die Handhabung der Schweißvorrichtung an eine extreme Nachgiebigkeit der zu verbindenden Schaumplatten gebunden. Eine solche Nachgiebigkeit ist bei üblichen XPS-Schaumplatten für die Wärmedämmung nicht gegeben.

Die WO 2012/016991 A1 beschreibt mehrlagige XPS-Platten, die miteinander verschweißt werden.

Der Vorschlag zum Verschweißen von Platten ist noch älter als die DE 3541053.

Bereits in der DE9201414 (die auch auf die Anmelderin zurückgeht) ist eine Verschweißung verschiedener Platten vorgesehen. Das hat jedoch ein anderes Ziel, nämlich die Verbindung von Platten unterschiedlicher Beschaffenheit. Es sollen Hartschaumplatten mit Weichschaumplatten verbunden werden, um eine höhere Schalldämmung zu schaffen. Für die Überwindung der Schwierigkeiten aus der Anwendung alternativer Treibmittel enthält die DE9201414 keinen Hinweis.

Noch älter als die DE9201414 ist die DE1704012.
Dort ist die Verschweißung von zwei aufeinander liegenden Schaumstoffblöcken dargestellt und beschrieben. Beim Verschweißen müssen die Schweißflächen erwärmt werden. Die Wärme wird mit Hilfe eines Heizdrahtes erzeugt, der zwischen den Schaumplatten an den Schweißflächen entlang geführt wird, Dabei wird eine Berührung des Heizdrahtes mit den Schweißflächen vermieden. Erkennbar soll damit eine Verschmutzung des Heizelementes durch den Kunststoffschaum verhindert werden. Zur Vermeidung der Berührung von Kunststoff und Heizelement ist ein Abstand zwischen Kunststoff und Heizelement gewahrt. Dies bewirkt ein Trennschwert, das zwischen den beiden aufeinander liegenden Schaumstoffblöcken durchgezogen wird. Das Trennschwert drückt die Oberfläche der Schaumstoffblöcke ein und bildet einen Hohlraum, in dem der Heizdraht geführt werden kann. Die Funktion des Trennschwertes kann dabei mit Rollen unterstützt werden. Die Rollen sind so angeordnet, daß der Hohlraum sich unmittelbar hinter dem Heizdraht wieder schließt. Dieser Vorschlag hat ein erhebliches Problem, denn die Verschweißung ist ausgesprochen schlecht. Selbst bei optimaler Rückformung der Oberfläche fehlt es an dem notwendigen Druck für eine ordentliche Verschweißung der erwärmten Fläche. Darüber hinaus kann eine Verschweißung überhaupt nur durch Plastifizierung der Schweißflächen entstehen. Das hat aber ein Kollabieren des Schaumes zur Folge. Damit schmilzt die Oberfläche ab. Jedes Abschmelzen schafft unter den Voraussetzungen der DE 1704012 neuen Abstand der Schweißflächen und verursacht weitere Schwierigkeiten beim Schweißen.

Nachdem sich die Fachwelt Jahre um eine ausreichende Produktqualität von XPS-Platten bemüht hat, welche mit alternativem Treibmittel hergestellt worden sind, hat die Anmelderin sich erneut der Technik des Verbindens von XPS-Schaumplatten geringer Dicke zu einer XPS-Schaumplatte größerer Dicke zugewandt. Die Einzelheiten sind in der EP 1213119 beschrieben. Dabei hat die Erfindung erkannt, daß es bei der Verbindung der XPS-Schaumplatten geringer Dicke zu einer XPS-Schaumplatte größerer Dicke auf die Diffunsionsfähigkeit ankommt.
Nach der DE 1213119 wird Diffusionsoffenheit zwischen mindestens zwei verbundenen Platten hergestellt, indem
a) extrudierte Ausgangsplatten verwendet werden, die spätestens unmittelbar vor der Verbindung an der Berührungsfläche durch Bearbeitung von der Extrusionshaut befreit werden und
b) entweder eine Klebung mit einem diffusionsoffenen Kleber erfolgt
c) oder nur eine teilflächige Verbindung zwischen den Platten erfolgt.

Von Vorteil sind dabei völlig plane Berührungsflächen der zu verbindenden Platten. Dazu erfolgt entweder eine Bearbeitung der Ausgangsplatten
d) an den Berührungsflächen und den gegenüberliegenden Flächen oder
e) einseitig an den Berührungsflächen und durch zusätzliche Maßnahmen, welche die sich ergebende Plattenkrümmung verhindern oder kompensieren.
Das Herstellen einer planen Oberflläche vor dem Verbinden der Platten verhindert, daß an der Verbindungsstelle Hohlrläume oder Kanäle entstehen, in die Wasser eindringen kann. Das Wasser würde die Isoliereigenschaften des Dämmstoffes herabsetzen und zusätzliche Sperren gegenüber einer Wasserdampfdiffusion bilden
Wenn eine gleichmäßige Bearbeitung an beiden gegenüberliegenden Flächen der Ausgangsplatten erfolgt, wird eine Plattenkrümmung verhindert.
Die Plattenkrümmung kann bei nur einseitiger Bearbeitung der Ausgangsplatten auch durch Wärmebehandlung der nicht bearbeiteten, gegenüberliegenden Fläche ausgeglichen werden. Denkbar ist auch eine Verbindung der Ausgangsplatten mit ausreichendem Druck, der eine Krümmung aufhebt. Nach der Verbindung halten sich die einseitig bearbeiteten Ausgangsplatten insbesondere bei gleicher Dicke gegenseitig in der gewünschten ebenen Form.

Eine Plattenkrümmung läßt sich auch verhindern, indem zwei extrudierte Schaumstränge einseitig an den Berührungsflächen oberflächenbearbeitet werden und anschließend, vorzugsweise sofort miteinander verbunden werden. Aufgrund ihrer Länge legen sich die Schaumstränge leicht aneinander an und kann ein ebener Verlauf der Stränge gewahrt werden.

Nach der Verbindung werden die Schaumstränge zu den gewünschten Platten abgelängt, auf Breite geschneitten und entsprechende Kantenprofile eingearbeitet.

Durch die Oberflächen-Bearbeitung werden je nach Qualität der Ausgangsplatten 1 bis 10 mm der Plattendicke entfernt.

Als Bearbeitung eignet sich zum Beispiel ein Schneiden durch Fräsen, Hobeln, Schneiden oder Sägen.

Der diffusionsoffene Kleber soll die Diffusionsoffenheit der Platte nicht mehr als um 50% herabsetzen, vorzugsweise nicht mehr als 20% verändern. Noch weiter bevorzugt wird ein Kleber verwendet, der die Diffusionsoffenheit der Platte gar nicht beeinträchtigt. Die Diffusionsoffenheit der Platten läßt sich leicht messen. Danach kann der Kleber aus den am Markt verfügbaren Klebern ausgewählt werden.

Die Verwendung diffusionsoffener Kleber ist zwar an sich bekannt. So verweist zum Beispiel die DE 68911643 T2 auf eine diffusionsdurchlässige und eine unterbrochene Klebeschicht zwischen Textilen und zwischen Autositzen. Auf die Lösung des Problems dicker, halogenfreigetriebener XPS-Platten ist daraus jedoch kein Hinweis zu entnehmen.

Bei teilflächiger Verbindung der Ausgangsplatten ist die Diffusionsoffenheit des Verbindungsmaterials nicht ausschlaggebend.
Es kann mit nicht diffusionsfähigem Kleber gearbeitet werden.
Es kann auch stellenweise geschweißt/geklebt werden.

Die einzelnen Verbindungsstellen sollen möglichst gleichmäßig über der Gesamtfläche verteilt sein und klein sein, so daß die ausdiffundierenden bzw. durchdiffundierenden Gase wie z.B. Treibmittel und Wasserdampf möglichst geringe Wege vorbei an den nicht diffusionsfähigen Verbindungsstellen zurücklegen müssen.
In dem Sinne sollen die Verbindungsstellen bei punktweiser oder fleckenweiser Ausbildung einzeln eine Ausdehnung besitzen, die vorzugsweise nicht größer als 25 Quadratzentimeter, vorzugsweise nicht größer als 2,5 Quadratzentimeter und noch weiter bevorzugt nicht größer als 0,25 Quadratzentimeter besitzen.

Bei streifenförmigen Verbindungsstellen werden die Streifen so gestaltet, daß sie in Ihrer Fläche und Ihrem Abstand die gleichen Verhältnisse wie die punktweisen bzw. fleckenweisen Verbindungsstellen wiedergeben.

Nach der EP 1213119 sollen von der gesamten Berührungsfläche zwischen den zu verbindenden Ausgangsplatten soll höchstens 80%, vorzugsweise höchstens 50% und noch weiter bevorzugt höchstens 20% durch Schweißflächen oder Klebeflächen verschlossen sein.

Wahlweise können auch nicht oder schlecht diffusionsfähige Reaktionskleber bzw. Hot-MeltKleber, die sofort haften, und hoch diffusionsfähige Kleber kombiniert werden, die erst mit der Zeit eine Klebekraft entwickeln. Die Kombination erfolgt dann vorzugsweise durch Auftrag der verschiedenen Kleber an unterschiedlichen Klebeflächen.
Mit der Kombination kann eine sehr schnelle Verbindung der Ausgangsplatten erreicht werden.
Eine schnelle Verbindung ist von Vorteil, wenn z.B. zwei Ausgangsplatten parallel zueinander und übereinander extrudiert werden, um sie nach einseitiger Oberflächenbearbeitung als Endlos-Stränge miteinander zu verbinden.

Zum Auftragen von Kleber eignen sich Klebewalzen oder Düsen, aus denen der Kleber gesprüht wird. Mit den Walzen läßt sich jede gewünschte Verteilung (sowohl hinsichtlich der flächenmäßigen Ausdehnung als auch hinsichtlich der Dicke des Auftrages) des Klebers auf die Berührungsflächen herbeiführen. Der Kleberauftrag kann dabei wie ein Farbauftrag gehandhabt werden. In dem Sinne sind anstelle der Walzen auch Auftragsplatten nach dem Vorbild von Druckplatten geeignet.
Düsen sind als Klebewerkzeug besonders für Hot-Meltkleber geeignet. In der beheizten Düse ist der Kleber bei entsprechender Erwärmung so dünnflüssig, daß er als Flüssigkeit aufgesprüht werden kann. Der Kleber kann dabei in der Form von Tröpfchen oder als Strahl oder als geschlossener Film gesprüht werden. Zur Erreichung eines teilflächigen Kleberauftrages können die Kleberstrahlen in Abständen voneinander und die Tröpfchen in entsprechender Streuung aufgetragen werden.
Für den Auftrag eines diffusionsoffenen Klebers ist gleichfalls ein tropfenförmiger oder streifenförmiger oder geschlossener Film Auftrag geeignet. Es kann auch ein Aufstrich mittels Quast oder dergleichen erfolgen.

Alternativ oder zusätzlich ist eine weitere Methode zur Bewirkung ausreichender Wasserdampfdiffusion vorgesehen. Diese Variante setzt auf eine mechanische Verbindung der Platten. Die aneinanderliegenden bzw. sich berührenden Platten werden durch mechanische Verbindung aneinander gehalten. Die Verbindung kann durch den oben beschriebenen teilweisen Kleberauftrag und/oder durch diffusionsoffenen Kleber an den Berührungsflächen unterstützt werden. Wahlweise kann auch eine mechanische Verbindung ohne Kleber an den Berührungsflächen bewirkt werden. In der zuletzt beschriebenen Situation kann die Diffusion nicht durch Kleber behindert werden.

Die mechanische Verbindung wird durch Verbindungselemente bewirkt, die an den Plattenseiten in die Platten greifen und/oder die Platten umgreifen. Diese Verbindung kann punktförmig und/oder linienförmig und/oder flächenweise erfolgen. Die Befestigungsmöglichen mit Verbindungselementen können den Verbindungsmöglichkeiten mit dem Kleber nachgebildet werden und umgekehrt.

Die Befestigungspunkte haben eine der flächigen Ausdehnung der Befestigungselemente entsprechende Ausdehnung. Die Bezeichnung als Punkte entspricht der Fachsprache, obwohl es sich um Flächen handelt.
Vorzugsweise sind die Befestigungspunkte gleichmäßig über der Berührungsfläche verteilt. Wahlweise verteilen sich die Befestigungspunkte auch entsprechend der Verteilung der Zugkräfte in den Platten. Die erwarteten Zugkräfte resultieren aus der Belastung der Platten und/oder aus den belastungsunabhängigen Plattenverformungen.

Die Befestigungslinien haben eine der flächigen Ausdehnung der Befestigungselemente entsprechende Ausdehnung. Die Bezeichnung als Linien entspricht der Fachsprache, obwohl es sich um Flächen handelt.
Die linienförmige Befestigung kann geradlinig und/oder gekrümmt verlaufen. Vorzugsweise verlaufen die Befestigungslinien geradlinig und quer über die gesamte Berührungsfläche. Die Befestigungslinien können entsprechend den oben beschriebenen Befestigungspunkte verteilt sein.
Für die Verteilung der Befestigungslinien gilt das gleiche wie für die Verteilung der Befestigungspunkte.

Wahlweise haben die Verbindungselemente die Form von Ankern. Dabei finden sich an den Verbindungselementen verdickte Stellen, die den Verbindungselementen die notwendige Ausreißfestigkeit im Schaum geben.
Die Ausreißfestigkeit kann auch auf andere Weise als durch Verdickung erzielt werden. Z.B. besitzen verschiedene gegensätzlich geneigte Verbindungselemente aufgrund ihrer gegensätzlichen Neigung bereits eine vorteilhafte Ausreißfestigkeit.
Vorzugsweise finden lang gestreckte, auf ihrer Länge unprofilierte Verbindungselemente für die Verbindungsvariante mit gegensätzlicher Neigung Anwendung. Dabei können die Verbindungselemente aus durch Ablängen einfacher Profilstränge oder durch Ausschneiden aus Platten gewonnen werden.
Wahlweise werden die Verbindungselemente außerdem in den Platten verklebt. Das erhöht die Ausreißfestigkeit.
Für die Verbindungselemente werden Ausnehmungen in die Platten eingearbeitet. Die Ausnehmungen werden den Verbindungselemente angepaßt oder umgekehrt.
Günstig ist die Verwendung von Fräsern für die Herstellung von Ausnehmungen. Geeignet sind sowohl Scheibenfräser als auch Fingerfräser und Stirnfräser.

Mit Fräsern kann seitlich in kürzester Zeit eine Ausnehmung hergestellt werden.
Die Fräserbewegung kann CNC-gesteuert oder mittels Schablonen gesteuert sein. Einfache Bewegungen lassen sich auch mit Endschaltern steuern.

Mit dem Fräser lassen sich auch flache Ausnehmungen für Verbindungselemente in den Schaum einarbeiten, in welche die Verbindungselemente seitlich eingelegt werden. Hier kann die Form der Verbindungselemente und der Ausnehmungen noch weiter variieren. Wahlweise werden sogar seitliche Formen mit seitlichen Kurven und/oder Geraden mit solchen Formen zur Plattenmitte hin an den Verbindungselementen kombiniert.

Die verschiedenen Fräser haben in Bezug auf die Platte unterschiedliche Arbeitshaltungen, zum Teil aber auch charakterische Arbeitshaltungen. Der Fingerfräser kann unterschiedlich stehen. Der Scheibenfräser verläuft mit seiner Arbeitsebene/Richtung entsprechend den Ausnehmungen regelmäßig quer zur Plattenlängsrichtung und geneigt zur Plattenebene, gegebenenfalls auch geneigt zur Plattenlängsrichtung. Der Stirnfräser steht mit seiner Arbeitsrichtung wie der Scheibenfräser.

Neben der spanabhebenden Bearbeitung durch Fräser besteht die Möglichkeit Nutzen, Ausnehmungen usw. durch CNC gesteuerte Glühdratschneidetechnik herzustellen.

Wahlweise werden die Ausgangsplatten einzeln (vor Aufeinanderlegen) bearbeitet oder werden die Kunststoffschaumplatten mit aufeinander gelegten Ausgangsplatten bearbeitet.

Für die Verbindungselemente ist vorzugsweise der gleiche Kunststoff wie für die Ausgangsplatten vorgesehen, bei XPS-Platten also XPS. Durch unterschiedliche Extrusion können unterschiedliche Raumgewichte anfallen. Vorzugsweise soll das Raumgewicht der Verbindungselemente und der Platten nicht mehr als 20 kg pro Kubikmeter, besser nicht mehr als 5 kg pro Kubikmeter voneinander abweichen.

Die Verbindungselemente werden wahlweise nach seitlicher Bearbeitung der Platten eingesetzt. Dann ist eine ausreichende Maßhaltigkeit vorgesehen.
Wahlweise werden die Verbindungselemente nach der Bearbeitung eingesetzt. Dann ist ein Übermaß der Verbindungselemente vorgesehen, so daß die Verbindungselemente von der seitlichen Bearbeitung erfaßt werden.

Die Verbindung ist oben an zwei Ausgangsplatten beschrieben. Nach der EP 1213119 lassen sich aber auch 3 und mehr Platten miteinander verbinden

Die mit der EP1213119 vorgeschlagene Technik hat überraschender Weise noch weitere Vorteile, denn mit dieser Technik kann die Anzahl der zu extrudierenden Dickenformate reduziert werden. Z.B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung/Verbindung bereits drei bzw. vier weitere handelsübliche Dickenformate. Es können auch unterschiedlich dicke Platten miteinander kombiniert werden, z.B. 50iger und 40iger Platen oder 70iger und 80iger Platten, wenn keine Gefahr eine Plattenkrümmung verursacht wird.

Vorzugsweise entsteht durch die erfindungsgemäße Verbindung eine neue Platte mit einer Mindestdicke von 70 mm.

Wahlweise werden zur Herstellung von Platten mit Nut und Feder drei Ausgangs-Platten im erfindungsgemäßen Sinne gedoppelt, wobei die mittlere Ausgangs-Platte gegenüber den beiden anderen Ausgangs-Platten (die in liegender Anordnung oben und unten liegen) so versetzt wird, daß sie an zwei Plattenseiten zurückspringt und eine Nut bildet und an den beiden Plattenseiten vorspringt und eine Feder bildet. So hergestellte Platten können schließend verlegt werden, wobei Federn der einen Platte in die Nuten angrenzender anderer Platten greifen.

Wahlweise werden zur Herstellung von Platten mit Stufenfalz zwei Ausgangs-Plattem gedoppelt, wobei die eine Ausgangs-Platte gegenüber der anderen Ausgangs-Platte versetzt ist. Das heißt, die eine Ausgangsplatte springt an zwei Seiten zurück und an den verbleibenden anderen Seiten vor. Dadurch können die entstandenen Platten gleichfalls schließend verlegt werden, indem sich die Platte an allen Seiten mit dem Stufenfalz der angrenzenden anderen Platten überlappt.

Bei der Herstellung von Nut und Feder bzw. Herstellung von Stufenfalz mit der Dopplung ergibt sich zusätzlich eine Einsparung an Schaum, weil die herkömmliche Konfektionierung des Schaumstranges ein Ausfräsen von Nut/Feder und Stufenfalz vorsieht, verbunden mit einem entsprechend hohen Verzehr des Schaumstrangrandes.

Die Technik der EP 1213119 kann auf verschiedene Kunststoffe Anwendung finden. Dazu gehören Polystyrol, Polyethylen, Polypropylen, Ehtylen und Propylencopolymere.

Nach der EP 1213119 ist wahlweise eine diffusionsoffene Verklebung oder eine teilflächige Verklebung der XPS-Schaumplatten geringerer Dicke zu einer XPS-Schaumplatte größerer Dicke vorgesehen. Die diffusionsoffene Verklebung hat sich bewährt.
Ein anderer Hersteller von XPS-Schaumplatten hat sich der anderen Variante der EP1213119, nämlich der teilweisen Verschweißung zugewendet. Dabei kommen Schweißbalken zum Einsatz, die sich quer zur Längsrichtung der XPS-Schaumplatten erstrecken und im Längsschnitt nach oben und nach unten eine Verzahnung zeigt. Die Verzahnung zeigt eine Vielzahl von der Balkenmitte gegen die XPS-Schaumplatten weisenden Spitzen. Zwischen den Spitzen finden sich naturgemäß Vertiefungen.

Der Schweißbalken ist beheizt. Die Spitzen berühren die Schweißflächen der miteinander zu verbinden XPS-Schaumplatten. Durch die Berührung kommt es zu einer Wärmeübertragung und zu einem Aufschmelzen der Schweißflächen. Anschließendes Zusammendrücken der Schweißflächen führt zu der gewünschten Verschweißung/Verbindung der XPS-Schaumplatten.

Auch die vorliegende Erfindung knüpft an die in der EP 1213119 gelehrte offenporige Verbindung an. Sie wendet sich dabei der Variante Verschweißung zu. Allerdings wird nicht die in der EP 1213119 offenbarte teilflächige Verschweißung weiterentwickelt. Vielmehr wendet sich die Erfindung wieder einer vollflächigen Verschweißung zu. Das klingt zwar widersprüchlich, weil mit der vollflächigen Verschweißung die Vorstellung einhergeht, daß eine geschlossene Sperrschicht entsteht.
Nach der Erfindung soll jedoch trotz der vollflächigen Verschweißung keine geschlossene Sperrschicht entstehen.
Die Erfindung knüpft daran an, daß vom XPS-Schaum nach Entfernen der Extrusionshaut mehrere tausend Schaumzelle (ca 1000 bis 10000 je Quadratdezimeter) nebeneinander liegend angeschnitten werden. Ein entsprechender feinzelliger Polystyrolschaum hat zum Beispiel Zellgrößen von 0,05 bis 0,6 mm. Die Zellmembranen/Zellwände zeigen eine Dicke, welche gleich einem 1/5 bis 1/50 des Zelldurchmessers ist.
Nach der Erfindung wird eine diffusionsdurchlässige Schweißschicht mit einer Schockplastifizierung der Schweißfläche erreicht. Das wird durch schlagartige Beaufschlagung der Schweißfläche mit hoher Temperatur erreicht.
Dabei heißt hohe Temperatur eine Temperatur von mindestens 100 Grad Celsius über der Schmelz-/Erweichungstemperatur, vorzugsweise mindestens 200 Grad Celsius und noch weiter bevorzugt mindestens 300 Grad Celsius über der Schmelz-/Erweichungstemperatur und höchst bevorzugt mindestens 400 Grad Celsius über der Schmelz/Erweichungstemperatur liegt.
Schockerwärmung beinhaltet darüber hinaus eine extrem kurzfristige Wärmebeaufschlagung Je kürzer die Wärmebeaufschlagung ist, desto höher kann die Temperatur sein und desto geringer kann die Dicke der Schweißschicht zwischen zwei miteinander verschweißten XPS-Schaumplatten gehalten werden. Je dünner die Schweißschicht ist (je geringer die Dicke der Schweißschicht ist), desto größer ist die Dampfdiffusionsdurchgängigkeit.

Durch die erfindungsgemäße Schockerwärmung kann eine extrem geringe/dünne Kunststoffschaumschicht aufgeschmolzen werden. Dabei entsteht aus den Zellmembranen, die sich in dieser Schicht befinden, eine Schmelze. Bei Verwendung eines Heizschwertes wird diese Schmelze hautbildend über die erwärmte Plattenoberfläche gezogen.
Es bildet sich an jeder der miteinander zu verbindenden Platten eine solche Haut.
Wenn sich gleichwohl nach dem Schweißen ein Überschreiten der erfindungsgemäßen Diffusionsgrenzen ergibt, wird die Geschwindigkeit erhöht und/oder die Erwärmung reduziert, um die Menge der erzeugten Schmelze zu reduzieren.
Wenn sich dagegen zeigt, daß die Diffusionsoffenheit größer ist als benötigt, kann die Geschwindigkeit verringert werden und/oder die Erwärmung erhöht werden, um mehr Schmelze zu erzeugen, die bei der Berührung des Heizschwertes/Heizkeiles mit der Plattenoberfläche über die Plattenoberfläche gezogen wird. Das verursacht mehr Schmelze und führt dann dazu, daß von der Plattenoberfläche eine dickere Schaumschicht aufgeschmolzen wird. Dabei kann die Dicke der an einer Plattenoberfläche aufgeschmolzenen Schaumschicht größer als der Zelldurchmesser sein.
Vorzugsweise ist die Dicke der aufgeschmolzenen Schaumschicht nicht größer(höchstens gleich) als der dreifache Zelldurchmesser, noch weiter bevorzugt nicht größer(höchstens gleich) als der zweifache Zelldurchmesser und höchst bevorzugt höchstens gleich(also gleich oder geringer) der Dicke eines Zelldurchmessers. Die Dicke der dabei über die Plattenoberfläche gezogenen Haut ist dabei aufgrund des Schaumfaktors jeweils nur ein kleiner Bruchteil der Dicke der aufgeschmolzenen Schaumschicht, so daß die Dicke der Schweißnaht, welche sich aus beiden Häuten der miteinander zu verbindenden Plattenoberflächen zusammensetzt, in der Regel kleiner als der Zelldurchmesser sein kann. Der Schaumfaktor ist der Faktor der Volumensvergrößerung, welche eine Polystyrolschmelze durch die Zugabe von Treibmitteln in den Extruder nach dem Austreten aus dem Extruder erfährt.
Mit zunehmender Dicke der über eine Plattenoberfläche gezogenen Haut erhöht sich die Festigkeit der Verschweißung.

Die Messung der Dampfdiffusionswiderstandszahl erfolgt vorzugsweise nach DIN.

Bei der erfindungsgemäßen Schockerwärmung kann die Temperatur der Wärmebeaufschlagung auch höher als die Zündtemperatur von Polymermatrix und/oder Treibmittel sein. Vor dem Hintergrund kann auch eine Wärmebeaufschlagung mit einer Temperatur vorkommen, die 500 oder 600 Grad Celsius über der Schmelz-/Erweichungstemperatur liegt.

Die Dauer(Einwirkungsdauer) der Wärmebeaufschlagung kann sich bei streifenförmiger Wärmebeaufschlagung der XPS-Schaumplatten einer über die ortsfeste Wärmequelle wandernden XPS-Schaumplatte auf wenige Sekunden pro durchlaufendem Meter Kunststoffschaumplatte beschränken. Die Sekunden pro Meter ergeben eine bestimmte Geschwindigkeit, mit der sich die XPS-Schaumplatten über die ortsfeste Wärmequelle hinweg bewegen.
Dieie Einwirkungsdauer pro durchlaufenden Meter kann zum Beispiel maxismal4 Sekunden betragen, vorzugsweise beträgt die Einwirkungsdauer höchstens 3 Sekunden, noch weiter bevorzugt höchstens 2 Sekunden und höchst bevorzugt höchstens 1 Sekunden. Die Einwirkungsdauer kann auch 0,5 oder auch nur 0,2 Sekunden betragen. Bei der angegebenen Einwirkungsdauer kann die Bewegungsgeschwindigkeit der Platten gegenüber der ortsfesten Wärmequelle den Bruchteil eines Meters pro Sekunde bis zu mehreren Metern pro Sekunde betragen, zum Beispiel 0,5 bis 5m pro Sekunde.

Die Verkürzung der Einwirkungsdauer findet dort ein Ende, wo mit den vorhandenen Mitteln keine ausreichende Verschweißung mehr entsteht. Dies läßt sich durch Prüfung der Schweißnahtfestigkeit klären. Nach der Erfindung soll die Schweißnaht mindestens eine Festigkeit von 0, 15 Newton pro Quadratmillimeter, vorzugsweise mindestens eine Festigkeit von 0,2 Newton pro Quadratmillimeter, noch weiter bevorzugt mindestens 0,25 Newton pro Quadratmillimeter und höchst bevorzugt mindestens 0,3 Newton pro Quadratmillimeter aufweisen.
Die Erfindung macht sich bei der Schockerwärmung/plastifizierung die geringe Wärmeleitfähigkeit von Kunststoffschaum zunutze. Auch wenn die Schweißfläche mit hoher Temperatur beaufschlagt wird, dauert es aufgrund der schlechten Wärmeleitfähigkeit von XPS-Schaum einige Zeit, bis die Wärme tief in den XPS-Schaum eingedrungen ist. Nach der Erfindung wird die Erwärmung abgebrochen, bevor die Wärme mehr als erforderlich in den XPS-Schaum eingedrungen ist.
Im Extremfall kann die Plastifizierung der Schweißflächen auf die an der Oberfläche liegende Schicht von Schaumzellen beschränkt werden.

Für die Erwärmung von Schweißflächen sind verschiedene Verfahren und Vorrichtungen bekannt. Die meisten bekannten Verfahren lassen sich auch für die erfindungsgemäße Schockerwärmung nutzen. Zum Teil ist die Anwendung bereits bekannt. Dazu gehört die in der DE1704012 offenbarte Beaufschlagung mit Strahlungswärme. Aus der DE4421016 ist ein Verfahren zur Erzeugung von Berührungswärme bekannt. Das geschieht mittels eines Heizschwertes oder mittels eines Heizkeiles. Das Heizschwert hat tatsächlich die Querschnittsform eines Schwertes. Allerdings fehlen die schwerttypische Spitze und der Handgriff. Das Heizschwert ist vorzugsweise an beiden Enden fest angeordnet. Nach der DE4421016 besitzt das Heizschwert eine geringe Dicke von 1 bis 10 mm, vorzugsweise 2 bis 4 mm. Von Vorteil soll sein, daß das Heizschwert extrem flach ausgebildet ist.
Für den Heizkeil gilt vorzugsweise das gleiche.

Das Heizschwert oder Heizkeil kann nach der DE4421016 elektrisch oder mit einem durchfließenden Heizmedium auf die notwendige Schweißtemperatur gebracht werden. Beide Beheizungsvarianten lassen sich sicher beherrschen. Bei geringen Temperaturen kann das System mit den durchfließenden Heizmedium gegenüber der elektrischen Beheizung Vorteile haben. Umgekehrt kann die elektrische Beheizung bei höheren Temperaturen gegenüber dem System mit dem durchfließenden Heizmedium Vorteile haben. Vorzugsweise ist deshalb bei der erfindungsgemäßen Schockplastifizierung bei Temperaturen, welche 200 Grad Celsius und mehr über der Schmelz-/Erweichungstemperatur von Polystyrol liegen, eine elektrische Beheizung des Heizschwertes oder Heizkeiles vorgesehen.
Für die Beheizung ist auch eine extrem dünnwandige Ausbildung des Heizschwertes oder Heizkeiles auch von Vorteil. Die Dünnwandigkeit von 1 mm hat auch bei elektrischer Beheizung den Vorteil, daß die Wärmezufuhr im Falle einer Betriebsstörung schlagartig unterbrochen werden kann. Es gibt dann kaum Probleme nachlaufender Wärmezufuhr.

Die Bemessung der Heizschwertbreite soll nach der DE4421016 in Abhängigkeit von der Heizschwerttemperatur eine Abhängigkeit von 20 bis 100 mm. Die richtige Breite soll durch versuchsweises Einsetzen verschiedener Heizschwerter mit unterschiedlicher Breite ermittelt werden. Das gleiche gilt für den Heizkeil.
Die Länge des Heizschwertes ist nach der DE4421016 so bemessen, daß es sich über die gesamte Breite der XPS-Schaumplatten erstreckt. Das gleiche gilt für den Heizkeil.

Das Heizschwert besteht aus einem Material, das bei der gewählten Schweißtemperatur ausreichend warmfest ist und keine übermäßige Verformung erfährt. Zu solchen Materialien gehören warmfeste Metalle, insbesondere warmfeste Stähle, aber auch Keramik bzw. Glaskeramik. Die Metalle haben gegenüber anderen Materialien den Vorteil besserer Wärmeleitung. Vorzugsweise finden mehrschichtige Heizschwerter aus Metall Anwendung. Dabei bildet die innere Schicht die Wärme durchleitende Tragschicht und die äußere Schicht die Berührungsfläche mit dem Kunststoff. Als äußere Schicht und Trennmittel eignen sich zum Beispiel Nickel, Chrom, Molybdän, Wolfram, Wolframkarbid, Aluminiumoxid, Chromoxid, Zirkoniumoxid sowie Mischungen davon und/oder Verbundschic hten davon, d.h. übereinander liegender Schichten davon. Die Schichtdicke kann zum 0,02 bis 1,5mm, vorzugsweise 0,05 bis 0,1mm, betragen. Die Metalle, Karbide und Oxide werden wahlweise wie eine Pulverlackierung aufgebracht. Dabei erfahren die Partikel und das Heizschwert eine unterschiedliche elektrische Beladung, so daß die Pulverpartkel an dem Heizschwert haften. In einem Ofen können die Partikel dann auf dem Heizschwert miteinander verschmolzen werden.

Wahlweise sollen auch mehrere Heizschwerter quer zu den Platten und in deren Bewegungsrichtung hintereinander angeordnet werden.

In der DE 4421016 wird auch vorgeschlagen, zur Vermeidung von Anbackungen eine Teflonbeschichtung des Heizschwertes vorzunehmen. Die Teflonbeschichtung hat einen Schmelzpunkt, der bei etwa 330 Grad Celsius liegt. Deshalb ist Teflon bis etwa 300 Grad Celsius belastbar. Darüber hinaus ist nach der Erfindung ein anderes Trennmittel vorgesehen. Zu den warmfesteren Trennmitteln gehört zum Beispiel Bornitrid, aber auch metallische Beschichtungen
Das gleiche gilt im Falle des Heizkeiles.

Aus der DE4421016 ist bekannt, daß sich das Heizschwert zwischen den miteinander zu verbindenden XPS-Schaumplatten quer zu deren Längsrichtung erstreckt. In der DE4421016 ist eine Breite von 20 bis 100 mm vorgesehen. Daraus ergibt sich ein mittlerer Breitenbereich von 50 bis 70 mm.
Entsprechendes gilt für den Heizkeil.

Bei einem Heizschwert/Heizkeil des mittleren Breitenbereiches und einer Temperatur, die 400 Grad Celsius über der Schmelz-/Erweichungstemperatur des Polystyrols liegt und bei einer Einwirkungszeit von rund 2 Sekunden pro durchlaufendem Meter Kunststoffschaumplatte kann nach dem Zusammendrücken der schockplastifizierten Schweißflächen an den XPS-Schaumplatten eine durch den Schweißvorgang veränderte Schaumschicht (die im folgenden als Schweißschicht bezeichnet wird) mit einer Dicke von 0,2 bis 0,7 mm, im Mittel von 0,4 bis 0,5mm beobachtet werden. Dabei ist zu berücksichtigen, daß durch das Zusammendrücken der beiden zu verbindenden XPS-Schaumplatten nicht nur eine Verbindung an den plastifizierten Schweißflächen entsteht, sondern auch eine Schaumschicht in den XPS-Schaumplatten eine Verformung erfährt, die unterhalb der Schweißfläche liegt und durch die Erwärmung eine Erweichung erfahren hat. Aufgrund dieser Verformung werden die betroffenen Schaumzellen mehr oder weniger zusammengedrückt. Jedoch ist dieser Bereich der Schweißschicht noch um einiges diffusionsoffener als ein ungeschäumtes Polystyrol, wie es in der Extrusionshaut der XPS-Platte vorkommt. Die vorstehenden Abmessungen der Schweißschicht und deren Beschaffenheit führen zu einem geringeren Wasserdampfdiffusionswiderstand als die Extrusionshaut der XPS-Platte.
Wahlweise kann die Wärmebeaufschlagung der Schweißfläche auch mit einer geringeren Temperatur und/oder mit längerer Einwirkungszeit erfolgen.
Nach der Erfindung kann die Temperatur auch verringert werden und/oder die Einwirkungszeit auch verlängert werden, allerdings nur im Rahmen, dass die Diffusionsoffenheit der Schweißschicht erhalten bleibt.. Dabei wird die Verringerung der Diffusionsoffenheit für die vorliegende Erfindung im Folgenden verstanden als Vergrößerung der Dampfdiffusionswiderstandszahl der durch Verschweißen von Ausgangsplatten entstandenen Platte größerer Dicke gegenüber der Dampfdiffusionswiderstandszahl von schließend aufeinander liegenden unverschweißten Platten.
Nach der Erfindung soll die Diffusionsoffenheit der durch Verschweißen von XPS-Schaumplatten geringer Dicke zu XPS-Schaumplatten größerer Dicke höchstens um 50%, vorzugsweise um höchstens 35% und noch weiter bevorzugt um höchstens 20% und höchst bevorzugt um höchstens 10% verringert werden. Die %Angaben beziehen sich auf obige Definition. Der Unterschied in der Diffusionsoffenheit/Dampfdiffusionswiderstandszahl wird durch Vergleich ermittelt. Dabei kommt es auf gleiche Messungen an. Zweckmäßigerweise sollten die Messungen nach DIN EN 12086 mit Prüfklima A (23 Grad Celsius 0/50% relative Feuchtigkeit) durchgeführt werden.

In vorstehendem Rahmen kann die Temperatur der Wärmebeaufschlagung auch 50 Grad Celsius über der Schmelz-/Erweichungstemperatur des Polystyrols liegen und/oder kann die Dauer der Wärmeeinwirkung bis zu 10 Sekunden und mehr pro durchlaufendem Meter XPS-Schaumplatten betragen.

Wahlweise können die beiden miteinander verschweißten XPS-Schaumplatten anschließend auch mit einer oder mehreren weiteren XPS-Schaumplatten verschweißt werden.

Das anschließende Verschweißen mit weiteren XPS-Schaumplatten wie auch das gleichzeitige Verschweißen mit weiteren XPS-Schaumplatten erfolgt in gleicher Weise wie vorstehend erläutert.

Für das erfindungsgemäße Verschweißen der vorgesehen XPS-Schaumplatten ist das in der DE4421016 dargestellte Heizschwert noch aus anderem Grunde wichtig. Das gleiche gilt für den Heizkeil. Das Heizschwert und der Heizkeil haben eine wichtige Führungsaufgabe. Es führt die beiden zu verbindenden XPS-Schaumplatten mit schwacher Neigung zueinander und zusammen. Vorzugsweise beträgt die Neigung, unter der die XPS-Schaumplatten zusammen geführt werden, 2 bis 10 Grad, noch weiter bevorzugt 3 bis 5 Grad. Trotz der geringen Neigung müssen sich die zusammen treffenden XPS-Schaumplatten noch verformen. Nach der DE 4421016 wird die Verformung dadurch bewirkt, daß die miteinander zu verschweißenden XPS-Schaumplatten durch einen Walzenspalt geführt werden und darüber hinaus zwischen Führungsrollen oder Walzen geführt sind. Der Abstand des Walzenspaltes von dem Heizschwert soll dabei so gewählt werden, daß die XPS-Platten auf dem Weg von dem Heizschwert in den Walzenspalt keine unzulässige Abkühlung erfahren.

Die Anwendung des aus der DE4421016 bekannten Heizschwert-Querschnittprofils ist bislang versuchsweise beim Aufkaschieren von XPS-Schaumplatten mit einer Dicke kleiner 10 mm auf dickere XPS-Schaumplatten gelungen. Dabei hatten beide Schaumplatten ein Raumgewicht von rund 35 Kg pro Kubikmeter. Die dünnen XPS-Schaumplatten lassen sich leicht verformen. Die Verformung ist notwendig, um die XPS-Schaumplatten mit dem Heizschwert in Berührung zu bringen und danach miteinander zur Anlage zu bringen. Solange die Festigkeit der XPS-Schaumplatten, die üblicherweise eine Länge von 1,25 m bei einer Breite von 0,6 m aufweisen, eine beschädigungsfreie Verformung erlaubt, ist selbst eine hin- und hergehende Verformung der XPS-Schaumplatten unproblematisch. Die hin- und hergehende Verformung ergibt sich, wenn die nach der Verschweißung oben liegende XPS-Schaumplatte der Verschweißungsanlage parallel zu der unten liegenden XPS-Schaumplatte zugeführt wird. Dann muß die oben zugeführte XPS-Schaumplatte zunächst gegen das Heizschwert und anschließend wieder zurück gebogen werden, um mit der unteren XPS-Schaumplatte wieder in eine Parallele zu kommen.

Sofern die Verformungsfähigkeit es erlaubt, kann sich die Verformung sogar auf eine von beiden zu verbindenden XPS-Schaumplatten beschränken. Dann wird die andere XPS-Schaumplatte gerade geführt und nicht verformt. Die gerade Führung einer XPS-Schaumplatte ist um vieles leichter als eine Führung unter hin- und hergehender Biegung.

Wenn jedoch dickere XPS-Schaumplatten mit geringerer Verformungsfähigkeit zu verarbeiten sind, kann es von Vorteil sein,
a) die notwendige Verformung entsprechend dem Vorschlag der DE4421016 auf beide miteinander zu verbindenden XPS-Schaumplatten zu verteilen und/oder
b) die notwendige Verformung durch Änderung der Zuführung zu verringern

Eine Reduzierung der Verformung entsteht schon, wenn das (zweischneidige) Schwert der DE4421016 nur in dem in dieser Druckschrift abgebildeten Bereich berührt wird.
In dem Sinne kann anstelle des zweischneidigen Schwertes auch ein einschneidiges Heizschwert zum Einsatz kommen, welches die gleiche Berührungsfläche wie das Heizschwert der DE 4421016.

Wahlweise wird die Verformung noch weiter verringert, wenn anstelle des Heizschwertes ein Heizkeil mit geraden Flächen vorgesehen ist, auf den die zu verschweißenden XPS-Platten gerade, also ungekrümmt zulaufen. Die XPS-Schaumplatten müssen nach Verlassen des Heizkeiles bei ihrem Zusammentreffen in Krümmung gehen, um sich bei der weiteren Bewegung wieder zurück zu verformen. Der aus dieser Verformung beim ersten Zusammentreffen der Schaumplatten erwachsende Druck kann ganz oder teilweise als Schweißdurck genutzt werden.

Sofern der beim ersten Zusammentreffen der Schaumplatten erwachsende Druck unerwünscht ist, kann dem mit Folgendem Rechnung getragen werden:
Die Schwerter müssen nicht die in der DE 4421016 gezeigte Krümmung aufweisen, die zu einem linsenförmigen (bi-konvexen) Querschnitt führt. Die Schwerter können sich auch - von der Schneide ausgehend - nach innen (bi-konkav) krümmen.
Nach der Erfindung kann eine solche Krümmung genutzt werden, um ein vorzugsweise vor der Berührung mit dem Heizschwert an der Schweißfläche in die gleiche Krümmung gebrachte XPS-Schaumplatte an dem Heizschwert entlang gleiten zu lassen. Nach Verlassen des Heizschwertes kann sich die XPS-Schaumplatte allenfalls wieder gerade zurückbiegen. Wenn die Bewegungsbahn der Mitte der miteinander verschweißten XPS-Schaumplatten sich als Tangente an die gekrümmte Heizfläche des Heizschwertes anschließt, so müßten sich die XPS-Schaumplatten nach Verlassen des Heizschwertes drucklos aneinanderlegen. Vorzugsweise ist die konkave Krümmung sehr gering, d.h. der zugehörige Krümmungsradius sehr groß.

Neben der Führung der XPS-Schaumplatten durch das Heizschwert bzw. den Heizkeil ist noch eine weitere Führung vorgesehen. Zum Beispiel können entsprechend der DE 4421016 Rollen zur Führung der XPS-Schaumplatten vorgesehen sein. Die Rollen sind besonders günstig, solange es sich um eine gerade Führung handelt. Zwar können die Rollen insbesondere in einer sehr dichten Anordnung auch zur Erzeugung einer Krümmung genutzt werden. Zur Erzeugung einer Krümmung können Walzen mit größerem Durchmesser als Rollen aber von Vorteil sein. Für komplizierte Führungswege und besonders dicke Platten können Führungsbleche und/oder Vakuum-Transportriemen von Vorteil sein. Das gleiche gilt für Bänder. Bei der Verwendung von Bändern sind Plattenbänder aus Metall von Vorteil, die eine geringe Dehnung besitzen, verschleißfester sind und eine genauere Steuerung erlauben. In Betracht kommt auch eine Kombination aus Bändern/Plattenbändern und Rollen oder Walzen und Führungsblechen oder Vakuum-Transportriemen.

Die Genauigkeit der XPS-Schaumplattenführung ist wichtig. Die Platten sollen als Dämmplatten zum Einsatz kommen. Dazu sollen die Platten dicht aneinander liegen. Maßungenauigkeiten der verschweißten Platten können eine unzulässige Spaltbildung zwischen den Platten verursachen und zum Ausschuß der Platten führen.
Nach der Erfindung werden entweder Platten verschweißt, die lediglich an der Schweißfläche bearbeitet sind und nach dem Verschweißen eine abschließende Oberflächenbearbeitung erfahren haben

In dem Sinne ist es von Vorteil, Extrusionsstrangabschnitte zu erzeugen, deren Länge ein Vielfaches der Länge üblicher XPS-Schaumplatten ist, um die langen Extrusionsstrangabschnitte erst an der Schweißfläche zu bearbeiten, dann miteinander zu verschweißen und abschließend fertig zu bearbeiten.
Oder es werden fertig bearbeitete XPS-Schaumplatten mit ausreichender Genauigkeit miteinander verschweißt. Die notwendige seitliche Führung der fertig bearbeiteten XPS-Schaumplatten kann seitlich mit Führungsblechen und Führungsstangen erreicht werden. In Längsrichtung der XPS-Schaumplatten ist nach der Erfindung vorzugsweise eine Gleichlaufsteuerung für die bewegten Platten vorgesehen. Dabei kann die Gleichlaufsteuerung ein Schrittschaltwerk beinhalten, das die Bewegung in einander schließend (ohne Unterbrechung) folgenden Schritten ausführt und die Bewegungsschritte der Platten abgleicht, um im Falle einer Differenz den einen Antrieb zu beschleunigen und/oder den anderen Antrieb zu verlangsamen, bis die Bewegungsschritte wieder übereinstimmen. Über die Schrittfolge kann außerdem ein Versatz der XPS-Schaumplatten herbeigeführt werden, der für die Herstellung von Platten mit Nut und Feder oder für die Herstellung von Platten mit Rand erforderlich ist.
In dem Fall würden zum Beispiel drei Platten zur Herstellung von dicken Platten mit Nut und Feder miteinander verschweißt. Von den drei Platten hätten die obere und untere Platte die gleiche Position zueinander, während die mittlere Platte durch Versatz gegenüber den anderen Platten am Rand der dicken Platte die Nut bzw. Feder bildet.
Für die Herstellung von dicken Platten mit Stufenfalz würden zum Beispiel zwei Platten miteinander verschweißt, wobei die oberen Platten gegen die unteren Platten durch Versatz am Rand eine Stufe bilden.

Es können aber auch wie bei der EP 1213119 mehr Platten als zwei oder drei miteinander verschweißt werden.

Bei der Positionierung der XPS-Schaumplatten für die Verschweißung kann eine vordere und/oder hintere Kante jeder XPS-Schaumplatte zur Positionsmessung herangezogen werden und/oder an den XPS-Schaumplatten Markierungen zur Positionsmessung angebracht werden, Vorteilhaft kann sein, die Markierungen zwischen den einander folgenden XPS-Schaumplatten in der Form von Abstandshaltern anzubringen, um bei Platten mit Nut- und Feder oder bei Platten mit Stufenfalz auf Abstand zu bringen. Sonst würden die entstehenden dicken Platten zugleich am Rande miteinander verschweißt.

Mit Hilfe der Markierungen und mit Hilfe eines Rechners, können alle Positionen in Steuerbefehle für die Antriebe zur Bewegung der Schaumplatten umgeformt werden.

Wahlweise können auch mechanische Positionierungshilfen genutzt werden.
Dazu gehören zum Beispiel Bänder, welche die Platten mit Mitnehmern hintergreifen und gegen das Heizschwert bzw. Keil schieben. Die Position der Mitnehmer läßt sich wahlweise verändern. Während des Bandbetriebes ergibt sich die Position jeden Mitnehmers aus der Stellung des Bandes und muß nicht einzeln bestimmt werden.

In der Zeichnung sind schematisch verschiedene Ausführungsbeispiele der Erfindung dargestellt.

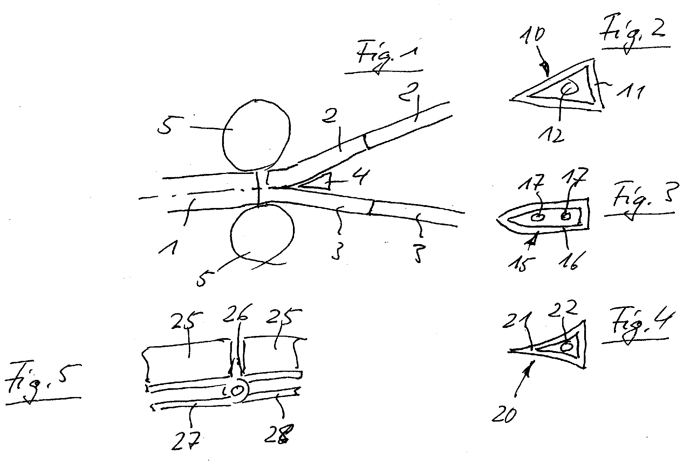

Fig. 1 zeigt zwei Einzelplatten 2 und 3 aus Polystyrolschaum mit einem Raumgewicht von 35 kg pro Kubikmeter, die auf verschiedenen Wegen zusammengeführt werden. Dabei werden die Platten 2 und 3 mit Hilfe nicht dargestellter Führungen mit einem Heizkeil 4 in Berührung gebracht. Der Heizkeil 4 besitzt eine Temperatur, welche 400 Grad Celsius über der Schmelz-/Erweichungstemperatur des Polystyrols der Platten 2 und 3 liegt. Die Platten besitzen eine übliche Länge von 1,25 m bei einer üblichen Breite von 0,6 m sowie eine Dicke von 80 mm. Die Platten 2 und 3 stammen aus einer Extrusion und sind an den vier Kanten sowie der Berührungsfläche durch Fräsen bearbeitet.
Jede Platte 2 und 3 wird innerhalb von 2 Sekunden unter Berührung mit dem Heizkeil an diesem vorbeigeführt. Dabei findet eine Schockplastifizierung der
Berührungsflächen/Schweißflächen statt.
Unmittelbar nach dem Heizkeil 4 werden die Platten 2 und 3 in einen Walzenspalt mit Walzen 5 geführt. Die Walzen 5 drücken die Platten 2 und 3 zusammen, so daß eine verschweißte Polystyrolschaumplatte 1 mit einer Dicke von rund 160 mm entsteht.

Muster, die nach Fig. 1 erzeugt worden sind, zeigen verschweißte Platten 1 mit einer Wasserdampfdiffusionswiderstandzahl von 130. Der Wasserdampfdiffusionswiderstand/Dampfsperrwert ergibt sich durch Multiplikation der Widerstandszahl mit der Dicke der Platte 1 in Metern. Der Sperrwert gibt an, um welchen Faktor die Platten 1 dichter sind als eine gleich dicke ruhende Luftschicht. Der Faktor ist im Ausführungsbeispiel 20,8.

Die Diffusionsbestimmung ist nach DIN EN 12086 erfolgt.

Desweitern zeigt die Schweißnaht eine Festigkeit von 0,41 Newton pro Quadratmillimeter. Dies ist um einiges Höher als die Mindestfestigkeit. Daraus ist zu schließen, daß die Schweißnahtdicke noch deutlich reduziert werden kann. Dazu kann die Schweißtemperatur reduziert und/oder die Einwirkungsdauer des Heizkeiles auf die Schweißflächen reduziert werden.

Die Fig. 2 zeigt einen Heizkeil 10 mit einer Hülle 11 aus warmfestem Stahlblech und einer innen liegenden elektrischen Heizspirale 12. Die Keilflächen stehen im Ausführungsbeispiel in einem Winkel von 8 Grad zueinander, in anderen Ausführungsbeispiel eine bis 15 Grad. Der Heizkeil hat eine Breite von 50mm.

Fig. 3 zeigt ein Heizschwert 15 für ein anderes Ausführungsbeispiel.
Das Heizschwert 15 besitzt eine Hülle 16 aus Glaskeramik.
In dem Heizschwert 15 sind zwei elektrische Heizspiralen 17 vorgesehen.
Die Berührungsflächen des Heizschwertes 15 sind konvex gewölbt.
Die Länge des Heizschwertes 15 entspricht der Länge des Heizkeiles nach Fig.2.
Die Dicke des Heizschwertes 15 beträgt 10 mm.
Um eine Polystyrolschaumplatte zumindest weitgehend/auf dem größten Teil der Schwertfläche mit dem Heizschert 15 in Berührung zu bringen, ist eine erhebliche Krümmung der Polystyrolschaumplatten entsprechend der Krümmung der Heizschwertberührungsfläche erforderlich. Nach Verlassen des Heizschwertes 15 müssen die Polystyrolschaumplatten in die entgegengesetzte Richtung gebogen werden, um in den Walzenspalt zu gelangen und dort den zum Verschweißen notwendigen Druck zu erfahren.

Fig. 4 zeigt ein Heizschwert 20 mit einer Hülle 21 und einer innen liegenden elektrischen Heizspirale 22. Die Berührungsflächen des Heizschwertes 20 sind konkav gewölbt.
Die Polystyrolschaumplatten werden vor der Berührung des Heizschwertes 20 in eine der konkaven Krümmung des Heizschwertes 20 angepaßte Krümmung gebracht, so daß die Polystyrolschaumplatten mit einem wesentlichen Teil der Heizschwertfläche in Berührung kommen. Der Vorteil der konkav gestalteten Schwertflächen ist, daß die Polystyrolschaumplatten nach Verlassen des Heizschwertes 20 nur entlastet werden müssen, um sich aufgrund der inneren Spannung in die ursprüngliche Form zurückzubilden, so daß sie ohne weiteres Zutun in den Walzenspalt gelangen können.

Fig. 5 zeigt ein Plattenband mit Plattenelementen 27 und 28, mit denen Polystrolschaumplatten 25 der Schockplastifizierung der Schweißflächen zugeführt werden. Dabei liegen die Polystyrolschaumplatten 25 auf den Plattenelementen 27 und 28 auf. Zwischen den Plattenelementen 27 und 28 sind Mitnehmer 26 vorgesehen, welche die Position der Polystyrolschaumplatten definieren.

Für den in Fig. 1 darüber liegenden Strang aus Polystyrolschaumplatten ist zur Führung eine nicht dargestellte Rinne vorgesehen. Die Polystyrolschaumplatten werden in der Rinne bewegt. Als Bewegungsantrieb dient im Ausführungsbeispiel ein baugleiches Plattenband, das aber mit den Mitnehmern nach unten zwischen die Polystyrolschaumplatten ragt.

## Patentansprüche

1. Verfahren zum *thermischen Verschweißen* von mindestens zwei *XPS*-Ausgangsplatten (2,3) zu einer neuen Platte (1,25), insbesondere von halogenfrei getriebenen *XPS-Ausgangsplatten* (2,3) zu neuen Platten (1,25) mit einer Mindestdicke von 70 mm, vorzugsweise mit einer Mindestdicke von 100m,
*wobei die XPS-Ausgangsplatten (2,3) an den Berührungsflächen erwärmt werden und nach der Wärmebelastung gegeneinander gedrückt werden,*
**dadurch gekennzeichnet, daß**
a) XPS-Ausgangsplatten (2,3) verwendet werden, die an der Berührungsfläche extrusionshautlos sind und
b) wobei die Berührungsflächen mit einer Temperatur belastet werden, die mindestens 100 Grad Celsius, vorzugsweise mindestens 200 Grad Celsius, noch weiter bevorzugt mindestens 300 Grad Celsius und höchst bevorzugt mindestens 400 Grad Celsius über der Schmelz-/Erweichungstemperatur des Polymers liegt,
c) wobei die Erwärmung der Berührungsflächen mit einer streifenförmigen Wärmequelle erfolgt und die XPS-Ausgangsplatten (2,3) über die Wärmequelle (12,15,20) und/oder unter der Wärmequelle (12,15,20) bewegt werden,
d) wobei die Einwirkungsdauer der Wärmequelle (12,15,20) auf die Berührungsfläche einer XPS-Ausgangsplatte (2,3) höchstens 4 Sekunden, vorzugsweise höchstens 3 Sekunden und noch weiter bevorzugt höchstens 2 Sekunden und höchst bevorzugt höchstens 1 Sekunde dauert.

2. Verfahren nach Anspruch 1, **dadurch gekennzeichnet, daß** die XPS-Ausgangsplatten (2,3) so miteinander verschweißt werden, daß die Diffusionswiderstandszahl der miteinander verschweißten XPS-Ausgangsplatten (2,3) höchstens 50%, vorzugsweise höchstens 35% und noch weiter bevorzugt höchstens 20% und höchst bevorzugt höchstens 10% höher als die Diffusionswiderstandszahl der schließend aufeinander liegenden unverschweißten XPS-Ausgangsplatten (2,3) ist, wobei an jeder zu verschweißenden Plattenoberfläche eine Schaumschicht aufgeschmolzen und zu einer Haut über die Plattenoberfläche gezogen wird, deren Dicke vorzugsweise höchstens gleich der Dicke des dreifachen Zelldurchmessers, noch weiter bevorzugt höchstens gleich der Dicke des zweifachen Zelldurchmessers und höchst bevorzugt höchstens gleich der Dicke eines Zelldurchmessers ist.

3. Verfahren nach Anspruch 1 oder 2, **dadurch gekennzeichnet, daß** die XPS-Ausgangsplatten (2,3) so miteinander verschweißt werden daß die Festigkeit der Schweißnaht mindestens 0,15, vorzugsweise 0,2, noch weiter bevorzugt mindestens 0,25 und höchst bevorzugt mindestens 0,3 Newton pro Quadratmillimeter ist.

4. Verfahren nach einem der Ansprüche 1 bis 3, **gekennzeichnet durch** Verwendung einer streifenförmige Wärmequelle (12,15,20), die sich quer zur Längsrichtung der Ausgangsplatten erstreckt und /oder eine Breite von 20 bis 100 mm, vorzugsweise eine Breite von 50 bis 70mm besitzt.

5. Verfahren nach einem der Ansprüche 1 bis 4, **gekennzeichnet durch** die Verwendung eines Heizschwertes oder eines Heizkeiles als Wärmequelle (12,15,20), die zumindest teilweise mit den Berührungsflächen der XPS-Ausgangsplatten (2,3) in Berührung kommen.

6. Verfahren nach Anspruch 4 oder 5, **gekennzeichnet durch** die Verwendung eines Heizkeiles (12), dessen Keilflächen einen Winkel bis 15 Grad, vorzugsweise einen Winkel bis 10 Grad zwischen sich einschließen

7. Verfahren nach Anspruch 4 oder 5, **gekennzeichnet durch** die Verwendung eines Heizschwertes (15,20), das im Querschnitt konkav oder konvex gewölbt ist.

8. Verfahren nach einem der Ansprüche 4 bis 7, **gekennzeichnet durch** die Verwendung eines Heizschwertes (15,20) oder Heizkeiles (12) mit einer Breite von 20 bis 100 mm , vorzugsweise einer Breite von 50 bis 70mm.

9. Verfahren nach einem der Ansprüche 5 bis 8, **dadurch gekennzeichnet, daß** Heizkeile (12) verwendet werden, welche an den Berührungsflächen mit den Polystyrolschaumplatten mit einem Trennmittel beschichtet sind.

10. Verfahren nach Anspruch 9, **dadurch gekennzeichnet, daß** Heizkeile (12) oder Heizschwerter (15,20) verwendet werden deren Trennmittel ein metallisches Trennmittel ist und in Pulverform auf das Heizschwert (15,20) aufgetragen wird, wobei die Pulverpartikel und Wärmebeaufschlagung miteinander verschmelzen.

11. Verfahren nach Anspruch 9 oder 10, **dadurch gekennzeichnet, daß** Heizkeile (12) oder Heizschwerter (15,20) verwendet werden, die eine Beschichtung mit einer Dicke von 0,2 bis 1,5mm, vorzugsweise mit einer Dicke von 0,5 bis 1 mm aufweisen.

12. Verfahren nach einem der Ansprüche 1 bis 11, **dadurch gekennzeichnet, daß** Extrusionsabschnitte als XPS-Ausgangsplatten (2,3) Verwendung finden, die nach ihrer Verschweißung bearbeitet werden, oder daß fertig bearbeitete XPS-Ausgangsplatten (2,3)Verwendung finden.

13. Verfahren nach einem der Ansprüche 1 bis 12, **dadurch gekennzeichnet, daß** die XPS-Ausgangsplatten (2,3) in Führungen bewegt werden, die aus Bändern (27,28) und/oder Rollen (5) und/oder Vakuumtransportriemen und/oder Walzen (5) und/oder Führungsblechen und/oder Führungsprofilen bestehen, wobei für die XPS-Ausgangsplatten (2,3) in verschiedenen Führungen eine Gleichlaufsteuerung vorgesehen ist, die mit einer Positionsmessung versehen ist.

14. Verfahren nach Anspruch 13, **gekennzeichnet durch** eine rechnergestützte Gleichlaufsteuerung, in die auch ein notwendiger Versatz der XPS-Ausgangsplatten (2,3) eingebbar ist.

15. Verfahren nach einem der Ansprüche 1 bis 14, **gekennzeichnet durch** die Verwendung einer Polymermatrix, die für halogenfrei getriebene XPS-Polystyrolschaumplatten (2,3) zu mindestens 50 Gew% aus Polystyrol besteht.

16. Verfahren nach Anspruch 15, **gekennzeichnet durch** die Verwendung einer Polymermatrix, die für halogenfrei getriebene Polystyrolschaumplatten aus Abmischungen und zu mindest 50 Gew% aus Polystyrol und Polystyrol-Butadien-Coblockpolymeren oder anderen mit Polystyrol mischbaren Polymeren besteht.

17. Verfahren nach einem der Ansprüche 1 bis 16, **dadurch gekennzeichnet, dass** als Treibmittel Kohlendioxid mit einem halogenfreien Treibmittel verwendet wird.

## Claims

1. Process for the thermal welding of at least two XPS starting panels (2, 3) to form a new panel (1, 25), in particular from halogen-free expanded starting panels (2, 3) to new panels (1, 25) with a minimum thickness of 70 mm, preferably with a minimum thickness of 100 mm,
*wherein the XPS starting panels (2, 3) are heated at their contact surfaces and after the heat treatment are pressed against one another,*
**characterised in that**
a) XPS starting panels (2, 3) are used that do not have an extrusion skin on the contact surface, and
b) wherein the contact surfaces are subjected to a temperature above the melting point/softening temperature of the polymer of at least 100 °C, preferably at least 200 °C, even more preferably at least 300 °C and most preferably at least 400 °C,
c) wherein the contact surfaces are heated with a strip-shaped heat source and the XPS starting panels (2, 3) are moved above the heat source (12, 15, 20) and/or below the heat source (12, 15, 20),
d) wherein the dwell time of the heat source (12, 15, 20) on the contact surface of an XPS starting panel (2, 3) is at most 4 seconds, preferably at most 3 seconds and even more preferably at most 2 seconds and most preferably at most 1 second.

2. Process according to claim 1, **characterised in that** the XPS starting panels (2, 3) are welded together such that the diffusion resistance factor of the welded-together XPS starting panels (2, 3) is at most 50%, preferably at most 35% and even more preferably at most 20% and most preferably at most 10% higher than the diffusion resistance factor of the un-welded XPS starting panels (2, 3) held together on top of one another, wherein a foam layer is melted on the surface of each panel and is drawn over the panel surface to a skin, whose thickness is preferably at most equal to three times the thickness of the cell diameter, even more preferably at most equal to twice the thickness of the cell diameter and most preferably at most equal to the thickness of a cell diameter.

3. Process according to claim 1 or 2, **characterised in that** the XPS starting panels (2, 3) are welded together, such that the strength of the weld line is at least 0.15, preferably 0.2, even more preferably at least 0.25 and most preferably at least 0.3 Newton per square millimetre.

4. Process according to one of claims 1 to 3 **characterised by** the use of a strip-shaped heat source (12, 15, 20) that extends transversely to the longitudinal direction of the starting panels and/or has a width of 20 to 100 mm, preferably a width of 50 to 70 mm.

5. Process according to one of claims 1 to 4 **characterised by** the use of a heated blade or a heated wedge as the heat source (12, 15, 20), which at least come into contact with the contact surfaces of the XPS starting panels (2, 3).

6. Process according to claim 4 or 5 **characterised by** the use of a heated wedge (12), whose wedge surfaces enclose between them an angle of up to 15°, preferably an angle of up to 10°.

7. Process according to claim 4 or 5 **characterised by** the use of a heated blade (15, 20) that has a concavely or convexly curved cross section.

8. Process according to one of claims 4 to 7 **characterised by** the use of a heated blade (15, 20) or a heated wedge (12) with a width of 20 to 100 mm, preferably a width of 50 to 70 mm.

9. Process according to one of claims 5 to 8, **characterised in that** heated wedges (12) are used, which are coated with a release agent on the surfaces in contact with the polystyrene foam panels.

10. Process according to claim 9, **characterised in that** heated wedges (12) or heated blades (15, 20) are used, whose release agent is a metallic release agent and is deposited in powder form onto the heating blade (15, 20), wherein the powder particles and heat treatment fuse together.

11. Process according to claim 9 or 10, **characterised in that** heated wedges (12) or heated blades (15, 20) are used, which possess a coating with a thickness of 0.2 to 1.5 mm, preferably with a thickness of 0.5 to 1 mm.

12. Process according to one of claims 1 to 11, **characterised in that** extrusion sections are used as the XPS starting panels (2, 3) that are machinedafter being welded, or that finished XPS starting panels (2, 3) are used.

13. Process according to one of claims 1 to 12, **characterised in that** the XPS starting panels (2, 3) are moved in guides that consist of belts (27, 28) and/or rollers (5) and or vacuum conveyer belts and/or drums (5) and/or guide plates and/or guide profiles, wherein a synchronisation control equipped with a position measurement is provided in the various guides for the XPS starting panels (2, 3).

14. Process according to claim 13 **characterised by** a computerised synchronisation control, into which a required offset of the XPS starting panels (2, 3) can be entered.

15. Process according to one of claims 1 to 14 **characterised by** the use of a polymer matrix that for halogen-free expanded XPS polystyrene foam panels (2, 3) consists of at least 50 wt % of polystyrene.

16. Process according to claim 15 **characterised by** the use of a polymer matrix that for halogen-free expanded XPS polystyrene foam panels consists of blends and to at least 50 wt % of polystyrene and polystyrene-butadiene block copolymers or other polystyrene-miscible polymers.

17. Process according to one of claims 1 to 16, **characterised in that** carbon dioxide with a halogen-free blowing agent is used as the blowing agent.

## Revendications

1. Procédé de soudage thermique d'au moins deux plaques de départ XPS (2, 3) pour une nouvelle plaque (1, 25), en particulier de plaques de départ XPS (2, 3) entrainées sans halogène, pour de nouvelles plaques (1, 25) d'une épaisseur mini-male de 70 mm, de préférence d'une épaisseur minimale de 100 mm, les plaques de départ XPS (2, 3) étant chauffées au niveau des faces de contact et pressées après la charge thermique les unes contre les autres, **caractérisé en ce que**
a) des plaques de départ XPS (2, 3) sont utilisées qui sont sans peau d'extrusion au niveau de la face de contact, et,
b) les faces de contact étant soumises à une température qui est au moins de 100 degrés Celsius, de préférence d'au moins 200 degrés Celsius, de préférence encore d'au moins 300 degrés Celsius, et de manière préférée entre toutes, d'au moins 400 degrés Celsius au-dessus de la température de ramollissement/de fonte du polymère,
c) le chauffage des faces de contact étant réalisé avec une source de chaleur en forme de bande, et les plaques de départ XPS (2, 3) étant déplacées au-dessus de la source de chaleur (12, 15, 20) et/ou en-dessous de la source de chaleur (12, 15, 20),
d) la durée d'action de la source de chaleur (12, 15, 20) sur la face de contact d'une plaque de départ XPS (2, 3) étant au maximum de 4 secondes, de préférence au maximum de 3 secondes et de préférence encore au maximum de 2 secondes et de manière préférée entre toutes, au maximum de 1 seconde.

2. Procédé selon la revendication 1, **caractérisé en ce que** les plaques de départ XPS (2, 3) sont soudées ensemble de sorte que le taux de résistance à la diffusion des plaques de départ XPS (2, 3) soudées ensemble est au maximum de 50 %, de préférence au maximum de 35 %, de préférence encore au maximum de 20 % et de manière préférée entre toutes, au maximum de 10 % supérieur au taux de résistance à la diffusion des plaques de départ XPS (2, 3) non soudées placées les unes sur les autres de façon resserrée, une couche de mousse étant fondue au niveau de chaque surface de plaque à souder et tirée pour une nouvelle peau au-dessus de la surface de plaque, dont l'épaisseur est de préférence égale ou supérieure à l'épaisseur du triple diamètre d'alvéole, de préférence encore égale ou supérieure à l'épaisseur du double diamètre d'alvéole et de manière préférée entre toutes, égale ou supérieure à l'épaisseur d'un diamètre d'alvéole.

3. Procédé selon la revendication 1 ou 2, **caractérisé en ce que** les plaques de départ XPS (2, 3) sont soudées ensemble de sorte que la solidité du cordon de soudure est d'au moins 0,15, de préférence 0,2, de préférence encore, d'au moins 0,25, et de manière préférée entre toutes, d'au moins 0,3 Newton par millimètre carré.

4. Procédé selon la revendication 1 à 3, **caractérisé par** l'utilisation d'une source de chaleur (12, 15, 20) en forme de bande qui s'étend transversalement à la direction longitudinale des plaques de départ et/ou possède une largeur de 20 à 100 mm, de préférence une largeur de 50 à 70 mm.

5. Procédé selon l'une des revendications 1 à 4, **caractérisé par** l'utilisation d'un élément chauffant ou d'une clavette chauffante en tant que source de chaleur (12, 15, 20) qui vient en contact au moins en partie avec les faces de contact des plaques de départ XPS (2, 3).

6. Procédé selon la revendication 4 ou 5, **caractérisé par** l'utilisation d'une clavette chauffante (12) dont les faces de clavette incluent un angle maximal de 15 degrés, de préférence un angle maximal de 10 degrés.

7. Procédé selon la revendication 4 ou 5, **caractérisé par** l'utilisation d'un élément chauffant (15, 20) qui est cintré en section transversale, concavement ou convexement.

8. Procédé selon l'une des revendications 4 à 7, **caractérisé par** l'utilisation d'un élément chauffant (15, 20) ou d'une clavette chauffante (12), avec une largeur de 20 à 100 mm, de préférence une largeur de 50 à 70 mm.

9. Procédé selon l'une des revendications 5 à 8, **caractérisé en ce que** des clavettes chauffantes (12) sont utilisées, lesquelles sont recouvertes d'un agent de séparation au niveau des faces de contact avec les plaques de mousse en polystyrène.

10. Procédé selon la revendication 9, **caractérisé en ce que** des clavettes chauffantes (12) ou des éléments chauffants (15, 20) sont utilisés dont l'agent de séparation est un agent de séparation métallique et est appliqué sous la forme de poudre sur l'élément chauffant (15, 20), les particules de poudre et la charge thermique étant fondues ensemble.

11. Procédé selon la revendication 9 ou 10, **caractérisé en ce que** des clavettes chauffantes (12) ou des éléments chauffants (15, 20) sont utilisés qui présentent un revêtement d'une épaisseur de 0,2 à 1,5 mm, de préférence d'une épaisseur de 0,5 à 1 mm.

12. Procédé selon l'une des revendications 1 à 11, **caractérisé en ce que** des sections d'extrusion trouvent une application en tant que plaques de départ XPS (2, 3), qui sont traitées après leur soudage, ou **en ce que** des plaques de départ XPS finies (2, 3) trouvent une application.

13. Procédé selon l'une des revendications 1 à 12, **caractérisé en ce que** les plaques de départ XPS (2, 3) sont mobiles dans des guides, qui sont composés de bandes (27, 28) et/ou de galets (5) et/ou de courroies de transport à vide et/ou de rouleaux (5) et/ou de tôles de guidage et/ou de profilés de guidage, une commande de synchronisation étant prévue pour les plaques de départ XPS (2, 3) dans différents guides, qui sont munis d'un mesurage de position.

14. Procédé selon la revendication 13, **caractérisé par** une commande de synchronisation assistée par ordinateur, dans laquelle un déplacement nécessaire des plaques de départ XPS (2, 3) peut être entré.

15. Procédé selon l'une des revendications 1 à 14, **caractérisé par** l'utilisation d'une matrice polymère qui est composée, pour des plaques en mousse de polystyrène XPS (2, 3) entrainées sans halogène, d'au moins 50 % poids en polystyrène.

16. Procédé selon la revendication 15, **caractérisé par** l'utilisation d'une matrice polymère qui est composée, pour des plaques en mousse de polystyrène XPS entrainées sans halogène, de mélanges et d'au moins 50 % poids de polystyrène et copolymères à blocs-butadiène-polystyrène ou autres polymères pouvant être mélangés avec du polystyrène.

17. Procédé selon l'une des revendications 1 à 16, **caractérisé en ce que** du dioxyde de carbone est utilisé en tant qu'agent propulseur avec un agent propulseur sans halogène.
